(19) Europäisches Patentamt

European Patent Office

Office européen des brevets

(11) **EP 1 546 770 B1**

(12) **FASCICULE DE BREVET EUROPEEN**

(45) Date de publication et mention
de la délivrance du brevet:
**12.04.2006 Bulletin 2006/15**

(51) Int Cl.:
*G02B 5/28* (2006.01)    *G02B 6/34* (2006.01)
*G01J 3/26* (2006.01)

(21) Numéro de dépôt: 03769599.6

(22) Date de dépôt: **09.09.2003**

(86) Numéro de dépôt international:
**PCT/FR2003/002678**

(87) Numéro de publication internationale:
**WO 2004/025336 (25.03.2004 Gazette 2004/13)**

(54) **COMPOSANT DE FILTRAGE OPTIQUE EN CRENEAU**

OPTISCHE FILTERKOMPONENTE MIT FLACHER OBERSEITE

FLAT TOP OPTICAL FILTERING COMPONENT

(84) Etats contractants désignés:
**DE ES FR GB IT NL**

(30) Priorité: **13.09.2002 FR 0211393**

(43) Date de publication de la demande:
**29.06.2005 Bulletin 2005/26**

(73) Titulaire: **Atmel Grenoble
38120 Saint-Egrève (FR)**

(72) Inventeurs:
• **RAMEL, Romain,
Thales Intellectual Property
94117 Arcueil cedex (FR)**
• **JARJAYES, Sylvie,
Thales Intellectual Property
94117 Arcueil cedex (FR)**
• **GLUCK, Stéphane,
Thales Intellectual Property
94117 Arcueil cedex (FR)**

(74) Mandataire: **Collet, Alain
Marks & Clerk France
31-33 Avenue Aristide Briand
94117 Arcueil Cedex (FR)**

(56) Documents cités:
**EP-A- 0 855 607        EP-A- 0 874 489
EP-A- 0 903 615        EP-A- 1 128 197
FR-A- 2 820 513**

• **TSUDA H ET AL: "Polarisation independent tunable liquid-crystal Fabry-Perot interferometer filter module with double-pass configuration" ELECTRONICS LETTERS, IEE STEVENAGE, GB, vol. 31, no. 10, 11 mai 1995 (1995-05-11), pages 828-829, XP006002799 ISSN: 0013-5194**
• **LAMPERSKI J: "Discretely tunable multi cavity FFP filter for standard WDM frequency grid" 2000 PROCEEDINGS 50TH. ELECTRONIC COMPONENTS AND TECHNOLOGY CONFERENCE. ECTC 2000. LAS VEGAS, NV, MAY 21-24, 2000, PROCEEDINGS OF THE ELECTRONIC COMPONENTS AND TECHNOLOGY CONFERENCE, NEW YORK, NY: IEEE, US, vol. CONF. 50, 21 mai 2000 (2000-05-21), pages 1572-1575, XP002178773 ISBN: 0-7803-5909-7**
• **SALEH A A M ET AL: "TWO-STAGE FABRY-PEROT FILTERS AS DEMULTIPLEXERS IN OPTICAL FDMA LAN'S" JOURNAL OF LIGHTWAVE TECHNOLOGY, IEEE. NEW YORK, US, vol. 7, no. 2, 1 février 1989 (1989-02-01), pages 323-330, XP000006106 ISSN: 0733-8724**

**Description**

L'invention concerne les filtres optiques sélectifs en longueur d'onde, permettant de laisser passer la lumière d'une bande spectrale optique étroite, centrée autour d'une longueur d'onde, et de réfléchir les longueurs d'onde situées en dehors de cette bande. On peut prévoir l'ajustement de la longueur d'onde centrale de la bande spectrale étroite par des moyens électriques.

Le mot lumière est entendu au sens large et inclut notamment des bandes spectrales dans l'infrarouge comme on le verra ci-après, une application principale de l'invention étant le filtrage de lumière dans les différentes bandes de télécommunications par fibres optiques comprises entre 1,3 et 1,61 micromètres.

L'intérêt de ces bandes de 1,3 à 1,61 micromètres résulte de ce que les fibres optiques actuelles, en verre, utilisées dans les réseaux de télécommunications, présentent une faible atténuation et que les signaux optiques peuvent donc être transmis sur de très grandes distances. Dans ce qui suit, on expliquera l'invention à propos de cette bande spectrale, étant entendu que l'invention est transposable à d'autres bandes si le besoin s'en fait sentir, en utilisant les matériaux adaptés à ces bandes différentes. Il est également bien entendu que l'invention n'est pas limitée au domaine des télécommunications, elle peut être mise en oeuvre dans tout domaine où une analyse spectrale est nécessaire, comme par exemple dans l'industrie pétrochimique (comme détecteur d'hydrocarbure) ou en biologie (dans l'analyse du sang).

Dans un réseau de télécommunications par fibre optique, on peut utiliser un câble de plusieurs fibres optiques pour réaliser plusieurs canaux de transmission différents ; on peut aussi effectuer un multiplexage temporel des informations pour atteindre le même but ; mais la tendance actuelle, pour un accroissement plus important de la capacité de débit d'informations du réseau, est de transmettre simultanément sur la même fibre optique plusieurs longueurs d'onde lumineuses modulées indépendamment les unes des autres et définissant chacune un canal d'information. La norme ITU (International Télécommunications Union) 692 propose de définir des canaux adjacents de largeur de bande spectrale optique 100 GHz, centrés sur N fréquences optiques normalisées adjacentes dont les valeurs sont 200 térahertz, 199,9 térahertz, 199,8 térahertz, etc., correspondant à N longueurs d'onde de 1,52 micromètres jusqu'à 1,61 micromètres. Sur un canal de cette largeur de bande on peut effectuer une modulation de lumière de 10 à 40 Giga bits par seconde sans trop de risque d'interférence avec les canaux de bandes spectrales immédiatement adjacentes (en utilisant des impulsions de modulation de forme gaussienne pour minimiser la bande passante occupée par cette modulation). Cette technique de multiplexage fréquentiel est appelée DWDM, de l'anglais "Dense Wavelength Division Multiplexing".

Dans un réseau de télécommunications, le problème est donc de pouvoir recueillir la lumière correspondant à un canal déterminé sans perturber la lumière des canaux voisins. Par exemple, à un noeud de transmission du réseau, affecté à l'émission et à la réception d'informations du canal i, il faut pouvoir recueillir la lumière à une fréquence centrale $F_i$ (longueur d'onde $\lambda_i$) sans gêner la transmission de la lumière modulant les fréquences centrales $F_1$ à $F_N$, alors que ces fréquences optiques sont très rapprochées les unes des autres.

Pour cela, on a besoin de réaliser des composants de filtrage optique très sélectifs en longueur d'onde lumineuse, capables de laisser passer la fréquence optique centrale $F_i$ et les fréquences situées dans une bande étroite inférieure à 50 GHz de part et d'autre de cette fréquence, et d'arrêter les autres bandes. A la sortie d'un tel filtre, on ne recueille que la lumière du canal i et on peut la démoduler pour recueillir l'information utile, ou l'envoyer dans une autre branche du réseau.

Plus précisément, pour être utilisable dans un réseau de télécommunication optique, un composant de filtrage doit respecter deux critères majeurs :

-    une modulation maximum à l'intérieur d'un canal, modulation qui en pratique doit être au maximum de l'ordre de 0,5 dB ; la modulation, bien connue dans la littérature anglo-saxonne sous l'appellation de « ripple » est l'écart maximum d'amplitude du signal en sortie du composant de filtrage sur l'étendue spectrale du canal considéré ;
-    une isolation minimum entre deux canaux adjacents qui, en pratique, doit être au moins de l'ordre de 20 dB. On définit l'isolation comme l'écart mesuré entre l'amplitude minimale du signal en sortie du composant de filtrage à l'intérieur du canal considéré et l'amplitude maximale à l'intérieur d'un canal adjacent.

On a déjà proposé de réaliser des composants de filtrage fonctionnant sur le principe des interféromètres de Fabry-Perot, réalisés par dépôts de couches semi-conductrices séparées les unes des autres par des lames d'air d'épaisseurs calibrées en rapport avec la longueur d'onde $\lambda_i$ à sélectionner. Un interféromètre comprend en pratique deux miroirs à couches diélectriques superposées (miroirs de Bragg), à fort coefficient de réflexion, séparés par une lame transparente d'épaisseur optique k.$\lambda_i$/2 (épaisseur réelle k. $\lambda_i$/2 si la lame est une lame d'air) où k est un entier définissant l'ordre du filtre interférométrique. Les miroirs et l'espace les séparant sont appelés : cavité. Le phosphure d'indium (InP) est bien adapté à ces réalisations en raison notamment de sa transparence pour les longueurs d'onde considérées, de son indice de réfraction très élevé, de la possibilité de faire croître des couches d'épaisseur bien contrôlée et de la possibilité d'utiliser la technique de micro-usinage sélectif entre couches d'InP et couhes d'InGaAs.

Si les épaisseurs de couches et les intervalles entre couches sont très bien contrôlés, et si les matériaux ont un fort écart indice de réfraction, un tel filtre s'avère très sélectif avec peu de couches ou d'altemance InP / air.

Une telle réalisation est décrite dans l'article de A. Spisser et autres, "Highly Selective 1.55 micrometer InP/ airgap micromachined Fabry-Perot filter for optical communications" dans Electronics Letters, N°34(5), pages 453-454, 1998. D'autres réalisations ont été proposées, en silicium micro-usiné, et en alliages à base d'arséniure de gallium.

Un autre filtre connu est décrit dans EP 0 903 615.

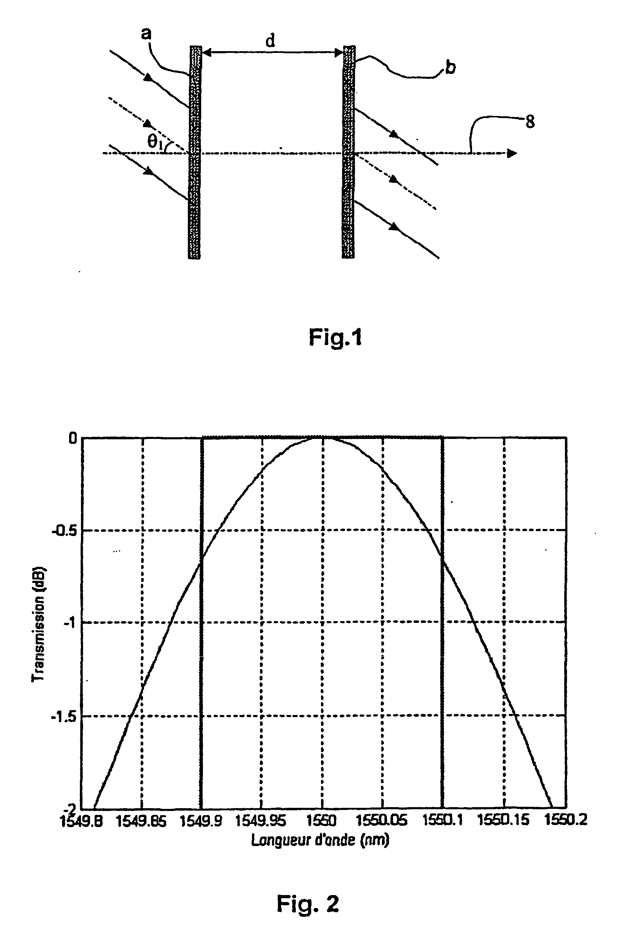

Une limitation intrinsèque apparaît lorsqu'on utilise un interféromètre de Fabry-Perot simple comme composant de filtrage. Un tel composant ne permet pas d'obtenir à la fois, une modulation minimale à l'intérieur d'un canal et une isolation suffisante entre deux canaux adjacents, pour une utilisation dans un réseau de télécommunication optique utilisant un multiplexage de type DWDM. Cette limitation sera mieux comprise à l'aide de la figure 1 où deux miroirs a et b, de réflectivité respective Ra et Rb, délimitent une cavité de Fabry-Perot. Les deux miroirs a et b sont maintenus écartés à une distance d l'un de l'autre. Un rayon lumineux pénètre le composant de filtrage avec une incidence $\theta$. Pour simplifier le raisonnement, on considère que les miroirs a et b sont infinis. Dans le cas particulier d'une cavité symétrique ($R_a = R_b = R$), les paramètres $\lambda$ et $\theta$ représentant respectivement la longueur d'onde et l'angle d'incidence du rayonnement à l'intérieur de la cavité. La courbe de transmission $T(\lambda)$ en fonction de sa longueur d'onde $\lambda$ est une fonction d'Airy et s'écrit :

$$T_i(\lambda) = \frac{1}{1 + M.\sin^2(\frac{2\pi.n.d\cos\theta}{\lambda})} \qquad (1)$$

où

$$M = \frac{4R}{(1-R)^2},$$

et où n est l'indice optique du milieu de la cavité.

Nous considérerons par la suite une cavité d'air afin de ne pas alourdir les notations. Il est bien entendu que l'invention n'est pas limitée à une cavité d'air et tout autre matériau optique d'indice n différent de 1 peut être utilisé.

Lorsque la condition de résonance est remplie c'est à dire pour une longueur d'onde $\lambda_p$ telle que

$$d.\cos\theta = p.\frac{\lambda_p}{2}$$ (p étant un nombre entier représentant l'ordre d'interférence), la transmission est maximale et vaut 100%.

Dans le cas d'une cavité Fabry-Perot utilisée comme filtre, on peut conserver l'ordre fixe, ce qui permet d'obtenir une gamme d'accordabilité en longueur d'onde bornée par l'intervalle qui sépare 2 pics de transmission consécutifs et que l'on appelle intervalle spectral libre (ISL). L'accordabilité est obtenue en modifiant la taille de la cavité d.

Pour illustrer les limitations d'une cavité de Fabry-Perot simple on choisit l'exemple numérique suivant :

- Longueur d'onde $\lambda$ à incidence normale ($\theta$ = 0) : $\lambda_o$=1550 nm
- Ordre d'interférence p = 4
- Taille de la cavité $d_o$=2 $\lambda_o$=2×1550 nm
- R = 99,6%

On cherche à obtenir un filtre pour les Télécommunications optiques avec des canaux espacés de 100GHz et un débit de 10Gb/s correspondant à une bande-passante de canal de 0.2nm (25 GHz) tel que décrit dans le paragraphe précédent.

La forme de la réponse spectrale du filtre en incidence normale est représentée figure 2. Elle est centrée sur $\lambda_o$=1550 nm. De type Lorentzienne, elle est assez différente de la forme d'un filtre idéal qui permettrait de laisser passer toute la bande passante du signal et de couper tout le reste. Dans ce cas, la modulation obtenue est d'environ 0.7 dB et satisfait à peine le critère de 0.5 dB demandé, mais la réjection sur les canaux adjacents est de l'ordre de -10dB et n'est donc pas suffisante vis à vis des -20 dB demandés. La forme du pic correspondant à une fonction d'Airy n'est donc pas satisfaisante pour l'application visée.

L'invention a pour but de résoudre ce problème en proposant un composant de filtrage utilisant une cavité de Fabry-Perot et utilisable dans un réseau de télécommunication optique utilisant la technique de multiplexage fréquentiel DWDM. Le principe de l'invention est basé sur l'effet de la multiplication de deux fonctions de transfert de filtres Fabry-Perot décalées spectralement.

Plus précisément l'invention a pour objet un composant de filtrage optique sélectif en longueur d'onde, apte à transmettre la lumière d'une bande spectrale optique étroite centrée autour d'une longueur d'onde donnée et apte à réfléchir la lumière dont la longueur d'onde est hors de ladite bande, la fonction de transfert du composant étant définie par la multiplication de deux fonctions de transfert de filtres de type Fabry-Perot décalés spectralement, caractérisé en ce que le composant comporte une cavité de Fabry-Perrot, un guide d'entrée conduisant un rayonnement lumineux vers la cavité selon une première incidence pour y effectuer un premier passage, des moyens de renvoi du rayonnement lumineux ayant traversé la cavité lors du premier passage pour effectuer un second passage dans la cavité selon une seconde incidence, et en ce que la seconde incidence est distincte de la première incidence.

Un composant de filtrage conforme à l'invention permet de réaliser un filtre optique dont la courbe de transmission en fonction de la longueur d'onde a une forme de créneau recouvrant la bande spectrale optique étroite. Cette forme de filtre est bien connu dans la littérature anglo-saxonne sous le nom de filtre « flat top ». L'invention permet de réaliser ce filtre de façon particulièrement simple et économique.

L'invention sera mieux comprise et d'autres avantages apparaîtront à la lecture de la description détaillée d'un mode de réalisation de l'invention donné à titre d'exemple, description illustrée par le dessin joint dans lequel :

la figure 1 représente une cavité de Fabry-Perot éclairée par un rayonnement d'incidence θ par rapport à une direction normale aux miroirs de la cavité ;
la figure 2 représente la courbe de transmission en longueur d'onde de la cavité représentée sur la figure 1 ;
la figure 3 représente schérnatiquement le parcours optique d'un rayonnement traversant un composant optique conforme à l'invention ;
la figure 4 représente une courbe de transmission du composant optique représenté sur la figure 3;
la figure 5 représente un exemple de réalisation d'une partie d'un composant optique représenté sur la figure 3 ;

Les figures 1 et 2 ont été décrites plus haut afin d'expliquer le problème résolu par l'invention.

Selon l'invention, on réalise un composant de filtrage optique dont la fonction de transfert est définie par la multiplication de deux fonctions de transfert de filtres de type Fabry-Perot décalés spectralement. La suite de la description présente un mode de réalisation permettant d'obtenir ce décalage spectral en n'utilisant qu'une seule cavité de Fabry-Perot.

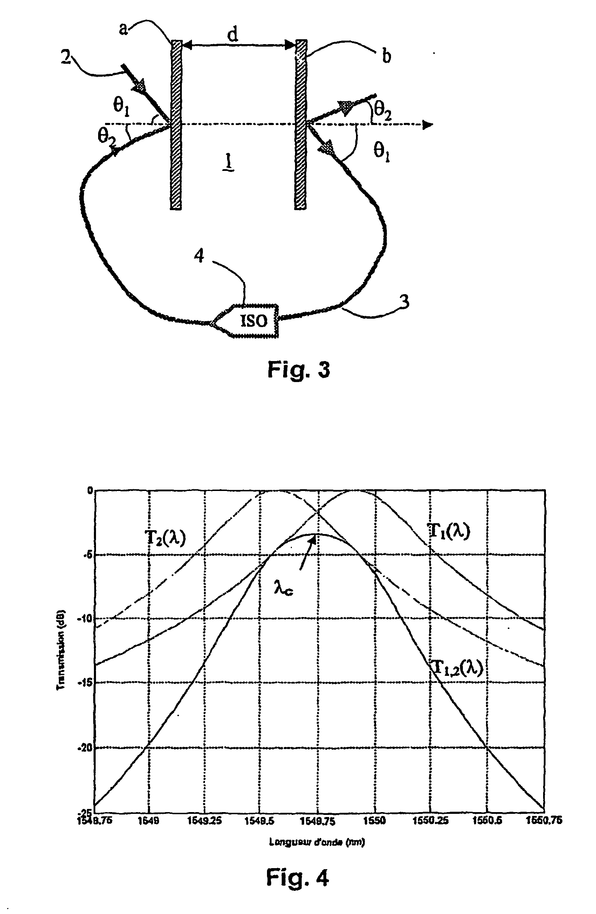

En se rapportant à la figure 3, le composant optique comporte une cavité 1 de Fabry-Perrot délimitée par deux miroirs a et b, un guide d'entrée conduisant un rayonnement lumineux 2 vers la cavité 1 selon une première incidence $\theta_1$ pour y effectuer un premier passage, des moyens de renvoi 3 du rayonnement lumineux ayant traversé la cavité 1 lors du premier passage pour effectuer un second passage dans la cavité 1 selon une seconde incidence $\theta_2$. La seconde incidence $\theta_2$ est distincte de la première incidence $\theta_1$.

Avantageusement, les moyens de renvoi comportent un isolateur optique 4 afin d'éviter toute réflexion parasite couplée plus ou moins fortement dans les moyens de renvoi 3. Notons cependant que le fait d'avoir deux angles d'incidence $\theta_1$ et $\theta_2$ différents minimise avantageusement cette réflexion parasite d'autant plus que la différence entre les angles $\theta_1$ et $\theta_2$ est importante.

Tout d'abord, afin de mieux comprendre l'invention, l'effet d'un angle d'incidence sur une cavité 1 est développé ci-dessous. D'après la formule (1), la longueur d'onde λ(θ) du pic de transmission obtenu pour un angle d'incidence θ s'écrit :

$$\lambda(\theta) = \lambda_o \times \cos\theta \qquad (2)$$

avec $\lambda_0 = 2.d / p$, $\lambda_0$ étant la longueur d'onde du pic de transmission pour un angle d'incidence nul $\theta_0$,
p étant l'ordre de la cavité,
et d la distanse entre les deux miroirs.

On déduit de la formule (2) que lorsque l'angle d'incidence θ augmente la courbe de transmission du filtre est décalée vers des longueurs d'onde plus courtes. En conséquence, en réalisant deux passages dans la cavité 1 à des incidences différentes on obtient bien la multiplication de deux fonctions de transfert de filtres de type Fabry-Perot décalés spectralement.

Plus précisément, les transmissions notées $T_1(\lambda)$ pour le premier passage et $T_2(\lambda)$ pour le second passage peuvent être déterminées à partir de la formule (2). Ces transmissions sont respectivement centrées sur $\lambda_1$ et $\lambda_2$ telles que :

$$\lambda_1 = \lambda_o . \cos \theta_1$$

$$\lambda_2 = \lambda_o . \cos \theta_2$$

avec $\lambda_0$ = 2.d / p (p = ordre de la cavité)

La transmission globale, notée $T_{1,2}(\lambda)$, pour les deux passages peut alors s'exprimer de la façon suivante :

$$T_{1,2}(\lambda) = \frac{1}{1 + M.\sin^2(\frac{2\pi d \cos\theta_1}{\lambda})} \times \frac{1}{1 + M.\sin^2(\frac{2\pi d \cos\theta_2}{\lambda})} \qquad (3)$$

Un exemple de cette transmission globale $T_{1,2}(\lambda)$ est représentée sur la figure 4. La longueur d'onde centrale $\lambda_c$ correspond à la longueur d'onde où $T_1(\lambda)$ et $T_2(\lambda)$ s'intersectent.

Lorsque la différence entre $\theta_1$ et $\theta_2$ diminue les courbes se rapprochent l'une de l'autre et la valeur de $T_{1,2}(\lambda)$ pour la longueur d'onde centrale augmente en se rapprochant de celle des maxima de chaque transmission $T_1(\lambda)$ et $T_2(\lambda)$. Pour une cavité Fabry-Perot donnée (ordre et coefficient de réflexion donnés), on choisit les deux angles d'incidence $\theta_1$ et $\theta_2$ pour obtenir une réponse $T_{1,2}(\lambda)$ sensiblement plate à l'intérieur d'un canal de transmission afin d'obtenir une courbe dont la forme se rapproche au mieux d'un créneau.

Avantageusement, le composant comporte une lentille 7 permettant de focaliser un rayonnement lumineux dans la cavité 1. Un premier rayonnement lumineux sort du guide d'entrée en direction de la lentille 7 et un second rayonnement lumineux sort des moyens de renvoi en direction de la lentille 7. Les premier et second rayonnement lumineux sont sensiblement parallèles à un axe optique 8 de la lentille 7 et décalés transversalement de l'axe optique 8 de la lentille 7. Le décalage du premier rayonnement lumineux est différent du décalage du second rayonnement lumineux. Ce décalage différent permet d'obtenir les incidences différentes $\theta_1$ et $\theta_2$.

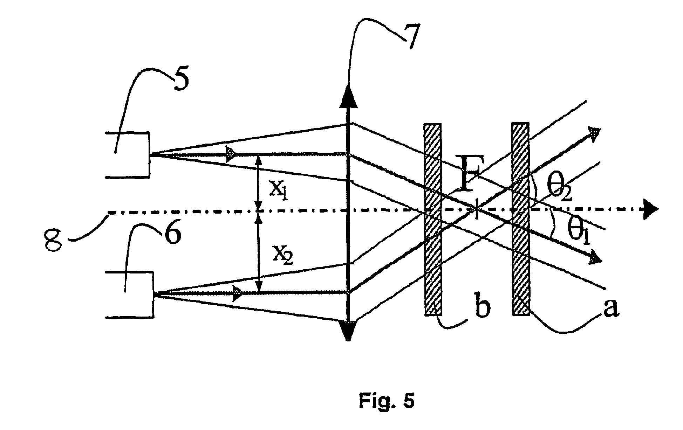

Plus précisément, la figure 5 présente un mode de réalisation permettant de réaliser des guides d'entrée 5 et 6 conduisant chacun un rayonnement vers la cavité 1. Le guide 5 permet de réaliser le premier passage dans la cavité 1 avec une incidence $\theta_1$ et le guide 6 permet de réaliser le second passage dans la cavité 1 avec une incidence $\theta_2$. On sait réaliser des guides d'onde pour des longueurs d'onde de l'ordre de 1500 nm, bien adaptés aux fibres optiques, par des moyens de photolithographie sur une plaque de verre ou de silicium qui assurent une précision de positionnement bien meilleure que le micron et échange d'ions pour modifier localement l'indice de réfraction. D'autres techniques sont envisageables pour réaliser les guides 5 et 6. On peut par exemple polir longitudinalement deux fibres optiques afin de régler la distance séparant leurs coeurs.

Les angles d'incidence $\theta_1$ et $\theta_2$ sont obtenus, dans le mode de réalisation représenté figure 5, en décalant transversalement les guides 5 et 6 de $x_1$ et $x_2$ devant des moyens de focalisation optique 7 de focale f. Le décalage se fait transversalement par rapport à l'axe optique 8 des moyens de focalisation optique 7. Les moyens de focalisation optique 7 sont positionnés par rapport à la cavité 1 de telle sorte que le foyer F des moyens de focalisation optique 7 soit situé sensiblement au centre de la cavité 1. Le décalage transversal peut être obtenu avec une grande précision (de l'ordre de la centaine de nanomètres) grâce à la technologie dite « d'optique planaire » où « guidée » par exemple.

Lorsque les angles $\theta_1$ et $\theta_2$ sont faibles on peut assimiler leurs tangentes aux angles eux-mêmes. On a alors :

$$\theta_1 + \theta_2 = \frac{x_1 + x_2}{f} \qquad (4)$$

Pour avoir une isolation entre guides supérieure à 70 dB, la valeur minimale de $(X_1 + X_2)$ est d'environ 5 fois le rayon de taille du faisceau lumineux transporté par le guide, soit 25 $\mu$m dans le cas de guides planaire de rayon de waist de 5$\mu$m. Le rayon de taille du faisceau est bien connu dans la littérature anglo-saxonne sous le nom de rayon de « waist ».

Notons qu'étant donné le faible décalage transversal demandé (de l'ordre de 20 à 30 $\mu$m) les aberrations de champ de la lentille 7 (focale de l'ordre du millimètre) sont négligeables.

Le principe de fonctionnement décrit ici demande de la précision sur les angles d'incidence $\theta_1$ et $\theta_2$. Il convient donc de quantifier l'incertitude de réalisation des angles d'incidence $\theta_1$ et $\theta_2$ de façon pratique. Pour se faire, nous considérons :

- une lentille de focale 1 mm avec une incertitude sur la distance focale liée à la réalisation de la lentille $\Delta f /f$ de 2% ;
- une distance transversale $x_1$ de 18 $\mu$m (pour obtenir environ un angle d'incidence $\theta_1$ de l'ordre de 1° du guide 5 avec une précision de positionnement de 0.1 $\mu$m.

D'après l'équation (4), pour un seul guide, l'incertitude de réalisation de l'angle d'incidence est de :

$$\frac{\Delta \theta}{\theta} = \frac{\Delta x}{x} + \frac{\Delta f}{f} = \frac{0.1}{18} + 0.02$$

Soit $\Delta\theta$ = 0,026° $\cong$ 0,03°

De plus, on constate que plus l'angle d'incidence $\theta$ est important plus la variation d'incidence à l'intérieur d'un intervalle de tolérance donné influe sur la qualité du composant optique. Par exemple, pour plus de 2° d'incidence, la variation de largeur de bande à -0,5 dB atteint plus de 0.1 nm (pour 0.2 nm visés) lorsque les angles d'incidence varient de 0,03° alors que pour 1° d'incidence, la variation de largeur de bande à -0,5 dB atteint moins de 0,05 nm.

Un autre paramètre est à prendre en compte pour la mise en oeuvre de l'invention. Il s'agit du rayon de taille du faisceau lumineux sortant des guides 5 et 6. Le rayon de taille du faisceau est bien connu dans la littérature anglo-saxonne sous le nom de rayon de « waist ». En effet, on a constaté que plus le rayon de waist du faisceau diminue, plus les pertes de transmission s'amplifient à incidence donnée. En outre, plus le rayon de waist du faisceau diminue, plus le pic de transmission du filtre se décale spectralement vers les courtes longueurs d'onde, il convient donc de prévoir ce décalage dans la conception du composant optique.

La tendance est donc de limiter les incidences $\theta_1$ et $\theta_2$ (cela a déjà été constaté vis à vis des tolérances de réalisation des incidences) mais également d'augmenter au maximum le rayon de waist des faisceaux issus des guides 5 et 6.

Notons qu'une variante de réalisation apparaît ici : en effet, le décalage spectral obtenu par différence d'incidence sur la cavité peut également être obtenu par modification du rayon de waist. Néanmoins, cet effet induit une dégradation intrinsèque des pertes introduites qui vont avec le décalage spectral.

On a par ailleurs étudié l'influence de la polarisation des faisceaux issus des guides 5 et 6 sur les caractéristiques du composant optique. Dans un exemple de réalisation (Ra=Rb=0.996, ordre p = 4, $\lambda$o=1550 nm, $\theta_1$ = 0,6° et $\theta_2$ = 1,35°), l'influence mesurée de la polarisation a été de l'ordre de 0,05 nm sur la largeur à - 0,5 dB. Cette influence est tout à fait acceptable pour une application dans les télécommunications optiques. Les performances du composant optique ne sont pas sensiblement altérées par une quelconque polarisation des faisceaux.

On a également étudié l'influence des pertes d'insertions entre les deux passages dans la cavité 1. Ici encore même avec des pertes importantes, par exemple de 3 dB entre les deux passages aucune influence n'a été observée sur la largeur à - 0,5 dB. Par ailleurs, la réjection du composant a été améliorée de 3 dB. Les performances du composant optique ne sont donc pas altérées par des pertes d'insertions entre les deux passages dans la cavité 1.

Avantageusement, le composant optique est accordable. Plus précisément, il comporte des moyens pour régler sa longueur d'onde centrale $\lambda_c$. Ces moyens sont par exemple réalisés en chargeant électrostatiquement les deux miroirs a et b de la cavité 1. En modifiant la tension électrique appliquée entre les deux miroirs, on modifie les forces générées par les charges, ce qui a pour conséquence de modifier la distance d de la cavité et donc la longueur d'onde $\lambda_c$.

**Revendications**

1. Composant de filtrage optique sélectif en longueur d'onde, apte à transmettre la lumière d'une bande spectrale optique étroite centrée autour d'une longueur d'onde donnée ($\lambda_c$) et apte à réfléchir la lumière dont la longueur d'onde est hors de ladite bande, la fonction de transfert ($T_{1,2}(\lambda)$) du composant étant définie par la multiplication de deux fonctions de transfert de filtres de type Fabry-Perot décalés spectralement, **caractérisé en ce que** le composant comporte une cavité de Fabry-Perrot (1), un guide d'entrée (5) conduisant un rayonnement lumineux vers la cavité (1) selon une première incidence ($\theta_1$) pour y effectuer un premier passage, des moyens de renvoi (3) du rayonnement lumineux ayant traversé la cavité (1) lors du premier passage pour effectuer un second passage dans la cavité (1) selon une seconde incidence ($\theta_2$), et **en ce que** la seconde incidence ($\theta_2$) est distincte de la première incidence ($\theta_1$).

**2.** Composant de filtrage optique selon la revendication 1, **caractérisé en ce que** les moyens de renvoi (3) comportent un isolateur optique (4).

**3.** Composant de filtrage optique selon l'une des revendications précédentes, **caractérisé en ce que** le composant comporte une lentille (7) permettant de focaliser un rayonnement lumineux dans la cavité (1), **en ce que** un premier rayonnement lumineux sort du guide d'entrée (5) en direction de la lentille (7), **en ce qu'**un second rayonnement lumineux sort des moyens de renvoi (3) en direction de la lentille (7), **en ce que** les premier et second rayonnement lumineux sont sensiblement parallèles à l'axe optique (8) de la lentille (7) et décalés transversalement de l'axe optique (8) de la lentille (7), et **en ce que** le décalage ($x_1$) du premier rayonnement lumineux est différent du décalage ($x_2$) du second rayonnement lumineux.

**4.** Composant de filtrage optique selon l'une des revendications précédentes, **caractérisé en ce que** le composant optique est accordable.

**Patentansprüche**

**1.** Wellenlängenselektives optisches Filterbauteil, das in der Lage ist, das Licht eines um eine gegebene Wellenlänge ($\lambda_c$) zentrierten schmalen optischen Spektralbands zu übertragen, und in der Lage ist, das Licht, dessen Wellenlänge sich außerhalb des Bands befindet, zu reflektieren, wobei die Transferfunktion ($T_{1,2}(\lambda)$) des Bauteils durch die Multiplikation von zwei Transferfunktionen von spektral verschobenen Filtern vom Fabry-Perot-Typ definiert wird, **dadurch gekennzeichnet, dass** das Bauteil einen Fabry-Perot-Hohlraum (1), einen Eingangsleiter (5), der eine Lichtstrahlung gemäß einem ersten Einfallwinkel ($\theta_1$) zum Hohlraum (1) führt, um dort einen ersten Durchgang durchzuführen, und Mittel zum Umlenken (3) der Lichtstrahlung, die den Hohlraum (1) beim ersten Durchgang durchquert hat, aufweist, um einen zweiten Durchgang durch den Hohlraum (1) gemäß einem zweiten Einfallwinkel ($\theta_2$) durchzuführen, und dass der zweite Einfallwinkel ($\theta_2$) sich vom ersten Einfallwinkel ($\theta_1$) unterscheidet.

**2.** Optisches Filterbauteil nach Anspruch 1, **dadurch gekennzeichnet, dass** die Umlenkmittel (3) einen optischen Isolator (4) aufweisen.

**3.** Optisches Filterbauteil nach einem der vorhergehenden Ansprüche, **dadurch gekennzeichnet, dass** das Bauteil eine Linse (7) aufweist, die es ermöglicht, eine Lichtstrahlung in dem Hohlraum (1) zu fokussieren, dass eine erste Lichtstrahlung aus dem Eingangsleiter (5) in Richtung der Linse (7) austritt, dass eine zweite Lichtstrahlung aus den Umlenkmitteln (3) in Richtung der Linse (7) austritt, dass die erste und die zweite Lichtstrahlung im Wesentlichen parallel zur optischen Achse (8) der Linse (7) und quer zur optischen Achse (8) der Linse (7) verschoben sind, und dass die Verschiebung ($x_1$) der ersten Lichtstrahlung sich von der Verschiebung ($x_2$) der zweiten Lichtstrahlung unterscheidet.

**4.** Filterbauteil nach einem der vorhergehenden Ansprüche, **dadurch gekennzeichnet, dass** das optische Filterbauteil abstimmbar ist.

**Claims**

**1.** Wavelength-selective optical filtering component, capable of transmitting light of a narrow optical spectral band centred around a given wavelength ($\lambda_c$) and capable of reflecting light having a wavelength outside said band, the transfer function ($T_{1,2}(\lambda)$) of the component being defined by the multiplication of two transfer functions of spectrally offset Fabry-Perot filters, **characterized in that** the component includes a Fabry-Perot cavity (1), an input waveguide (5) conveying light radiation into the cavity (1) at a first angle of incidence ($\theta_1$), in order to make a first pass therethrough, and means (3) for returning the light radiation that has passed through the cavity (1) during the first pass in order to make a second pass through the cavity (1) at a second angle of incidence ($\theta_2$), and **in that** the second angle of incidence ($\theta_2$) differs from the first angle of incidence ($\theta_1$).

2. Optical filtering component according to Claim 1, **characterized in that** the return means (3) include an optical isolator (4).

3. Optical filtering component according to either of the preceding claims, **characterized in that** the component includes a lens (7) for focusing light radiation into the cavity (1), **in that** first light radiation leaves the input waveguide (5) in the direction of the lens (7), **in that** second light radiation leaves the return means (3) in the direction of the lens (7), **in that** the first light radiation and the second light radiation are approximately parallel to the optical axis (8) of the lens (7) and are offset transversely from the optical axis (8) of the lens (7), and **in that** the offset ($x_1$) of the first light radiation is different from the offset ($x_2$) of the second light radiation.

4. Optical filtering component according to one of the preceding claims, **characterized in that** the optical component is tunable.

**Fig.1**

**Fig. 2**

**Fig. 3**

**Fig. 4**

**Fig. 5**